(19) **Europäisches Patentamt**
**European Patent Office**
**Office européen des brevets**

(11) **EP 2 632 276 B1**

(12) **FASCICULE DE BREVET EUROPEEN**

(45) Date de publication et mention
de la délivrance du brevet:
**12.06.2019 Bulletin 2019/24**

(51) Int Cl.:
*A21D 13/40* (2017.01)         *A21D 8/02* (2006.01)
*A21D 10/02* (2006.01)         *A21D 6/00* (2006.01)
*A21D 13/47* (2017.01)

(21) Numéro de dépôt: **11773477.2**

(22) Date de dépôt: **25.10.2011**

(86) Numéro de dépôt international:
**PCT/EP2011/068687**

(87) Numéro de publication internationale:
**WO 2012/055887 (03.05.2012 Gazette 2012/18)**

(54) **PRODUITS DE BOULANGERIE, EN PARTICULIER PAINS PRECUITS SPECIALEMENT ADAPTES A LA CUISSON AU GRILLE-PAIN ET LEUR PROCEDE DE FABRICATION**

BACKWAREN, INSBESONDERE VORGEBACKENE BROTE ZUM AUFBACKEN IN EINEM TOASTER UND VERFAHREN ZU IHRER HERSTELLUNG

BAKERY PRODUCTS, IN PARTICULAR PRE-BAKED BREADS ESPECIALLY SUITABLE FOR BAKING IN A TOASTER AND METHOD FOR THE PRODUCTION THEREOF

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2010 FR 1058797**

(43) Date de publication de la demande:
**04.09.2013 Bulletin 2013/36**

(73) Titulaire: **Jacquet Panification**
**63360 Saint-Beauzire (FR)**

(72) Inventeurs:
• **PIEZEL, Xavier**
**F-63310 Randan (FR)**
• **HERBIN, Claire**
**F-63000 Clermont-ferrand (FR)**

(74) Mandataire: **Cabinet Plasseraud**
**235 Cours Lafayette**
**69006 Lyon (FR)**

(56) Documents cités:
EP-A2- 0 841 009       WO-A1-00/35291
WO-A1-97/31539         WO-A1-99/40796
WO-A1-2004/039163      DE-C1- 4 125 912
NL-A- 255 103          US-A- 3 536 014
US-A- 3 936 255        US-A- 4 606 923
US-A- 4 789 555        US-A1- 2004 151 807

**Description**

**Domaine de l'invention**

Le domaine de l'invention est celui des pâtons pour l'obtention de produits de boulangerie cuits ou précuits, et de la fabrication industrielle de tels produits, dont la cuisson doit être terminée par tout moyen de chauffage (notamment par rayonnement), tels que les grille-pains.

**Arrière-plan technologique - problèmes techniques**

La fabrication industrielle de pains, et en particulier de pains précuits, comporte classiquement les phases de préparation de la pâte par mélange des ingrédients traditionnels, une phase de fermentation, une phase de cuisson dans des fours traditionnels de boulangerie, éventuellement équipés de moyens de convection, et une phase d'emballage.

Dans le cas de pains précuits, la cuisson est effectuée à une température moindre qu'à la normale pour un pain cuit, et/ou pendant un temps inférieur à la normale.

Le pain précuit industriel répond au besoin du consommateur de consommer du pain chaud, frais et croustillant, au moment de son choix.

La cuisson finale des pains précuits connus à ce jour, s'effectue dans des fours traditionnels ou dans des fours à micro-ondes.

Ces pains précuits sont généralement trop volumineux pour être introduits sans tranchage dans un grille-pain.

Pour simplifier encore plus la consommation de pains précuits, les inventeurs ont imaginé de fournir au consommateur des unités de pain précuit dont la forme et les dimensions sont adaptées pour finir leur cuisson dans un grille-pain standard, par exemple un grille-pain à fente(s) ou à grille(s) verticale(s) ou horizontale(s).

La difficulté alors rencontrée dans la fabrication de tels pains précuits se présentant sous forme d'unités, consiste à réaliser des pièces de pain précuit dont l'épaisseur est relativement constante et dont les deux faces principales sont sensiblement planes, ou plus exactement régulières sans reliefs prononcés, de façon à obtenir une cuisson uniforme et régulière au grille-pain.

Faute de cela, le grillage du pain présente des différences très marquées, par exemple une carbonisation aux endroits les plus bombés et un déficit de cuisson aux endroits les plus creux.

Par ailleurs, il n'existe pas à ce jour de produits de boulangerie industriels, en particulier de pains précuits, de forme et de dimensions adaptées pour une fin de cuisson au grille-pain.

La forme et les dimensions adaptées de ce type de pains précuits pourraient être celles d'une tranche insérable dans un grille-pain standard, par exemple à fente(s) ou à grille(s) verticale(s) et/ou horizontale(s).

WO 2004/039163-A1 décrit des pâtons surgelés ou réfrigérés prêts à cuire à base de farine ou d'agent levant et de graisse avec moins de 0,5% de sucre ou de substitut de sucre, se présentant sous la forme de blocs comprenant des rainures ou failles définissant plusieurs blocs, pouvant recevoir une garniture. WO 97/31539 décrit des pâtons de forme générale parallélépipédique comportant chacun deux rainures transversales définissant trois tranches. La découpe de ces tranches et ces rainures sont obtenues à l'aide d'un rouleau rotatif équipé de nervures de découpe respectivement transversales et circonférentielles.

WO 99/40796-A1 décrit un appareil en forme de boules qui sont transportées par un convoyeur jusqu'à une station de coupe comprenant des moyens de coupe constitués par une pluralité de roues montées sur un rouleau imprimant des marques en creux sur les pâtons. Ces pâtons estampés sont ensuite revêtus de farine. US 3,536,014 décrit des pâtons en forme de dômes sur lesquels sont ménagées des marques en creux à l'aide de rouleaux.

US 4,606,923-B décrit une pâte à pizza se présentant sous la forme d'une feuille de pâte sur laquelle est ménagée une empreinte définie par des marques en creux qui définissent de grandes zones blister et de petites zones blister non compressées. WO 00/35291-A1 décrit un pâton de pizza prêt à cuire comprenant des rainures radiales EP 0 841 009-A2 divulgue un dispositif d'estampage de pâtons de pain permettant d'estamper un quadrillage de rainures sur le pâton, de manière à définir des blocs découpables de formes bombées. US 2004/0151807-A1 décrit un procédé de fabrication industrielle de biscuits, dans lequel des pâtons sont estampés à l'aide d'un rouleau nervuré.

NL 255103-A décrit un produit de boulangerie de forme carrée présentant à sa surface quatre rainures (2) formant une croix. US 3,936,255-A décrit un appareil d'estampage de pâtons. US 4,789,555-A décrit un marqueur de pâtons en formes de dômes présentant une rainure en forme de spirale. DE 41 25 912-C1 divulgue un dispositif pour la mise en forme de pains plats à partir d'un pâton, ce dispositif comprenant un rouleau pour aplanir et un rouleau pour former des rainures et produire un pâton.

**Objectifs de l'invention**

La présente invention vise à satisfaire au moins l'un des objectifs énumérés ci-après.

∘ fournir un procédé industriel de fabrication de produits de boulangerie, en particulier de pains précuits, de forme et de dimensions adaptées pour une cuisson dans un grille-pain ;

∘ fournir un procédé industriel de fabrication de produits de boulangerie, en particulier de pains, se présentant sous la forme d'unités présentant au moins deux faces sensiblement planes (sans relief(s) prononcé(s)), et dont les dimensions ne varient pas ou varient peu après fermentation, et cuisson, au moins partielle ;

∘ fournir un procédé industriel de fabrication de produits de boulangerie, en particulier de pains, de forme et de dimensions adaptées pour une cuisson dans un grille-pain et qui répondent aux normes industrielles de standardisation et de production en série, tout en maintenant un niveau élevé et constant de qualité organoleptique ;

∘ fournir un procédé industriel de fabrication de produits de boulangerie, en particulier de pains, permettant d'obtenir un pain, par exemple un pain précuit, dont la cuisson est terminée au grille-pain en offrant une régularité de cuisson à la surface pour préserver son aspect attirant pour le consommateur et ses bonnes qualités organoleptiques ;

∘ fournir un procédé industriel de fabrication de produits de boulangerie, en particulier de pains, en limitant, autant que faire se peut, le coût de revient ;

∘ fournir des pâtons permettant de produire les produits de boulangerie, en particulier des pains, par exemple précuits de type de ceux satisfaisant à tout ou partie des objectifs visés ci-dessus.

**Brève description de l'invention**

Dans un de ses aspects, l'invention vise des pâtons pour l'obtention de produits de boulangerie, en particulier des pains de préférence précuits, ces pâtons se présentant sous forme de pièces (ou d'unités) de dimensions (x, y, z) en référence à un repère tridimensionnel d'axes (X, Y, Z) orthogonaux, caractérisés en ce qu'ils comportent des marques en creux réparties de manière homogène sur toute la face supérieure du pâton, de manière que la surface maximale d'un seul tenant (ou continue) de la face supérieure du pâton 1, dans un plan (X, Y), soit inférieure à 25%, de préférence inférieure ou égale à 20%, ou mieux encore comprise entre 15 et 20% de la surface totale de la face supérieure du produit, dans un plan (X, Y), en ce que la profondeur (p) d'au moins une partie des marques en creux 2 correspond à au moins, selon un ordre croissant de préférence, 80, 90 et 92 % de la dimension (z) du pâton 1 considéré, (z) et (p) étant mesurés sur le même axe, et, de manière plus préférée (p) est égal à 98 % +/- 1% de (z), et en ce que les marques en creux 2 sont au moins partiellement remplies d'un agent anti-adhésion de fabrication.

Dans un autre de ses aspects, l'invention vise un procédé de fabrication de produits de boulangerie, en particulier de pains, caractérisé en ce qu'il consiste essentiellement :

-a- à préparer une pâte,

-b- éventuellement, à faire fermenter en masse (pointage) ladite pâte,

-c- à transformer la pâte en bandes de pâte de largeur (x),

-d- à marquer en creux au moins la face supérieure des bandes de pâte, la profondeur (p) d'au moins une partie des marques en creux correspondant à au moins, selon un ordre croissant de préférence, 80, 90, 92% de l'épaisseur (z) de la bande de pâtons considérée, (z) et (p) étant mesurées sur le même axe, et, de manière plus préférée, (p) est égale à 98% +/-1% de (z),

les marques en creux étant au moins partiellement remplies d'un agent anti-adhésion de fabrication,

-e- éventuellement, à compléter le remplissage des marques en creux des pâtons par l'agent anti-adhésion,

-f- à découper transversalement les bandes de pâte pour obtenir des pâtons de longueur (y) donnée,

-g- à faire fermenter les pâtons,

-h- à cuire les pâtons,

-i- éventuellement, à refroidir les pains cuits,

-j- éventuellement, à emballer les pains cuits refroidis.

Il est du mérite des inventeurs d'avoir conçu et réalisé cette étape -d- de marquage en creux notamment pour assurer une stabilité dimensionnelle aux pâtons, après fermentation et cuisson.

De préférence, cette étape de marquage -d- intervient avant la fermentation -g-.

Le procédé selon l'invention est d'autant plus avantageux qu'il est simple et peu coûteux à mettre en oeuvre et qu'il assure une haute qualité organoleptique et esthétique aux pains qu'il permet de produire.

**Description détaillée de l'invention**

*Définitions*

La terminologie employée dans le présent exposé est explicitée au travers des définitions qui suivent et qui sont toutes des exemples non limitatifs:

*"Produits de boulangerie"* désigne des pains de type quelconque, avec ou sans croûte, des pains de mie, des pains blancs, des pains noirs, des pains spéciaux avec inclusion de céréales de différents types, et plus généralement tous produits obtenus par fermentation et cuisson d'une pâte à base de farine de céréale quelconque (e.g. blé), d'eau, de sucre, de levure, de matières grasses, entre autres.

*"Pain précuit"* désigne un pain précuit à une température inférieure de 10 à 20% à la température usuelle des fours de boulangerie, et pour une durée de cuisson plus courte que la normale mais suffisante pour permettre la transformation du coeur du pâton en pain. Un pain précuit peut par exemple être cuit pendant une période de 5 à 15 minutes, à une température comprise entre 180 et 230°C. Par exemple, un pain précuit correspond à une cuisson à 80% +/-10% du pain.

*"Pain"* désigne tous types de pains dont notamment du pain français ou équivalent, obtenu à partir de pâte très hydratée, peu riche en ingrédients et ayant tendance à coller. Il peut s'agir également de pains colorés plus riches en ingrédients du type pain aux céréales, pain noir, etc.

*"Pâton"* désigne une unité ou une pièce de pâte à pain destinée à être cuite pour produire une unité ou une pièce de pain de forme analogue.

*"Grille-pain"* désigne tous grille-pain standard, notamment grille-pain à fente(s) ou grille-pain à grille(s) verticale(s) et/ou horizontale(s), permettant de faire griller des tranches d'aliments, notamment de pain (toasts). Un grille-pain utilise généralement les propriétés du rayonnement infrarouge pour chauffer un morceau de pain (effet joule).

*"Surface maximale d'un seul tenant (ou continue)"* désigne la plus grande surface Smax d'aspect uniforme et de contour régulier existant selon la projection (X', Y') pour un pain et selon la projection (X, Y) pour un pâton, de la face supérieure du pain ou du pâton selon l'invention. Les dimensions de cette projection sont (x', y') pour un pain et (x, y) pour un pâton. Dans cette projection, Smax a un aspect uniforme sans marques en creux et est délimitée par les marques en creux et/ou les bords de la projection, avec les conditions selon lesquelles, tout ou partie des marques en creux (de préférence toutes) s'étendent d'un bord parallèle à X' ou X de la projection au delà de l'axe médian parallèle à l'axe Y' ou Y, et/ou d'un bord parallèle à Y' ou Y de la projection au delà de l'axe médian parallèle à l'axe X' ou X. Le pourtour de Smax est régulier sans crénelures, ni indentations, ni lignes brisées.

## DESCRIPTION DETAILLEE DE L'INVENTION

*Les produits de boulangerie : les pains (pré)cuits* (qui ne font pas partie de l'invention) *et les pâtons*

Les produits de boulangerie selon la présente description comprennent les pains précuits de dimensions (x', y', z') telles qu'ils peuvent être introduits et chauffés dans des grille-pains à fentes standards.

Ce sont de véritables pièces de pains unitaires, non tranchées. Elles peuvent avoir une forme générale de polyèdre, de disque, ou une forme ovoïde ou elliptique en vue de face. Ce sont par exemple des "petits pains" ("*muffins*") ou des brioches ("*buns*"). De préférence, ces pains (pré)cuits ont une forme générale parallélépipédique à bords arrondis.

Selon une variante, il peut s'agir d'un parallélépipède dont les dimensions x' et y' peuvent être égales.

Avantageusement, ces produits de boulangerie, en particulier ces pains de préférence précuits, se présentent sous forme de pièces (ou d'unités) de dimensions (x', y', z') en référence à un repère tridimensionnel d'axes (X', Y', Z') orthogonaux, ces pièces étant obtenues à partir de pâtons de dimensions (x, y, z) en référence à un repère tridimensionnel d'axes (X, Y, Z) orthogonaux caractérisés en ce que les marques en creux sont réparties de manière homogène sur toute la face supérieure du produit, de manière que la surface maximale (Smax) d'un seul tenant (ou continue) de la face supérieure du produit, dans un plan (X', Y'), soit inférieure à 25%, de préférence inférieure ou égale à 20%, ou mieux encore comprise entre 15 et 20% de la surface totale de la face supérieure du produit, dans un plan (X', Y').

Conformément à une caractéristique remarquable de l'invention, les marques en creux sont choisies parmi les rainures longitudinales, transversales, diagonales, curvilignes, rectilignes, en lignes brisées, parmi les combinaisons de ces rainures et/ou parmi les marques en creux faites par exemple au poinçon.

Les pâtons sont des produits intermédiaires de la fabrication des produits de boulangerie, en particulier des pains, de préférence précuits, selon l'invention.

Ces pains (pré)cuits et ces pâtons peuvent être obtenus notamment par le procédé selon l'invention.

Ils sont décrits ci-après à titre d'exemples, en référence aux figures annexées.

EP 2 632 276 B1

Descriptif des figures

La figure 1 est une vue en perspective d'un pâton (x, y, z) obtenu à l'issue de l'étape -f- ou -g- du procédé.
La figure 2 est une vue en coupe longitudinale selon la ligne II-II de la figure 1.
La figure 3 est une vue des bandes de pâte de largeur (x) de l'étape -c-.
La figure 4 est une vue schématique de dessus des pâtons unitaires (x, y, z) après marquage de l'étape -d- et découpe transversale de l'étape -f-.
La figure 5COMP montre un contrexemple de l'invention (témoin négatif).

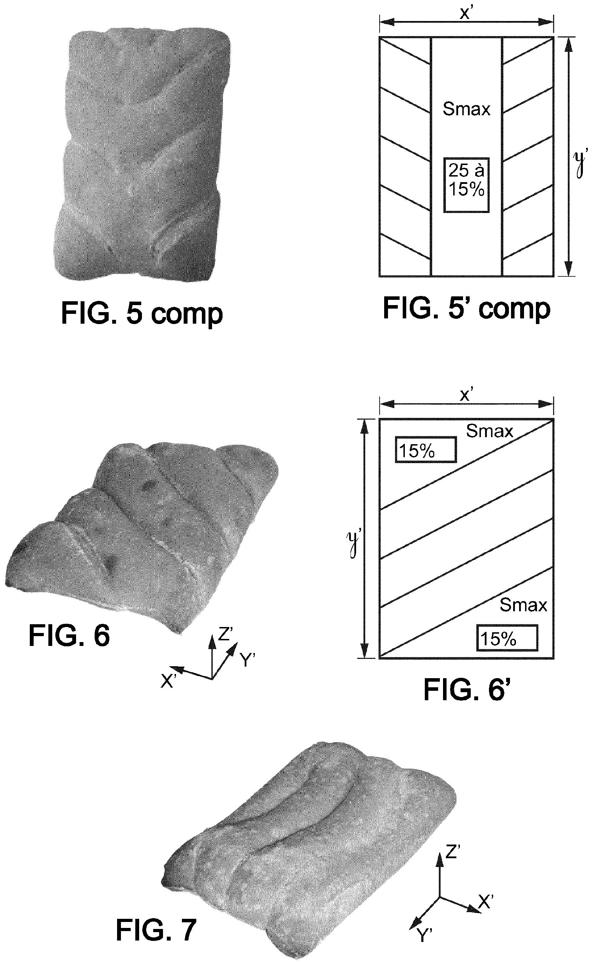

La figure 5'COMP est une projection dans un plan X',Y' du pain de la figure 5COMP pour montrer la surface maximale d'un seul tenant de la face supérieure de ce pain.
Les figures 6 à 10 sont des vues en perspective de dessus montrant les modèles ou motifs de marquage des pâtons (x, y, z) réalisés à l'étape -d-.
La figure 6' est une projection dans un plan X',Y' du pain de la figure 6 pour montrer la surface maximale d'un seul tenant de la face supérieure de ce pain.

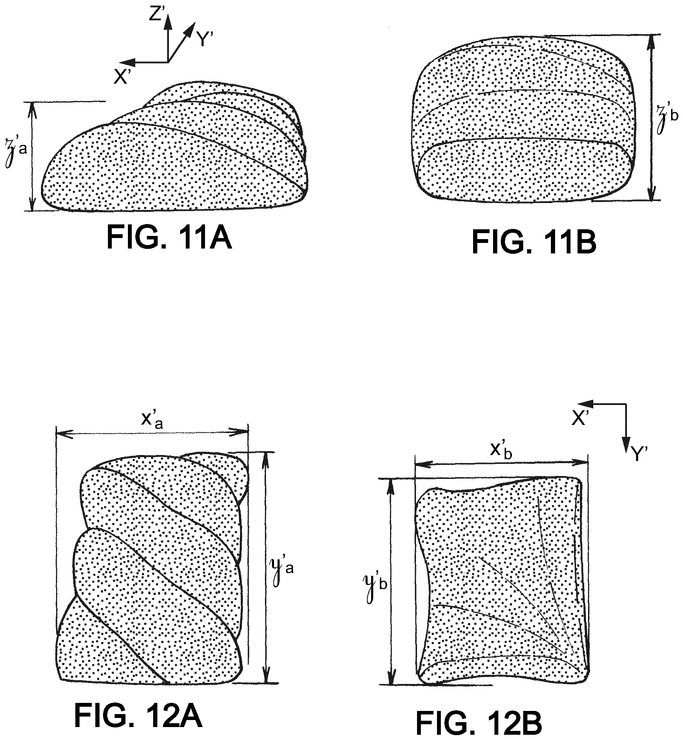

Les figures 11A&B et 12A&B sont respectivement des vues de côté et de dessus

- à gauche, d'un pain marqué de dimensions $(x'_a, y'_a, z'_a)$ obtenu à partir d'un pâton selon l'invention de dimensions $(x_a, y_a, z_a)$, et
- à droite, d'un pain non marqué de dimensions $(x'_b, y'_b, z'_b)$ obtenu à partir d'un pâton de dimensions $(x_b, y_b, z_b)$.

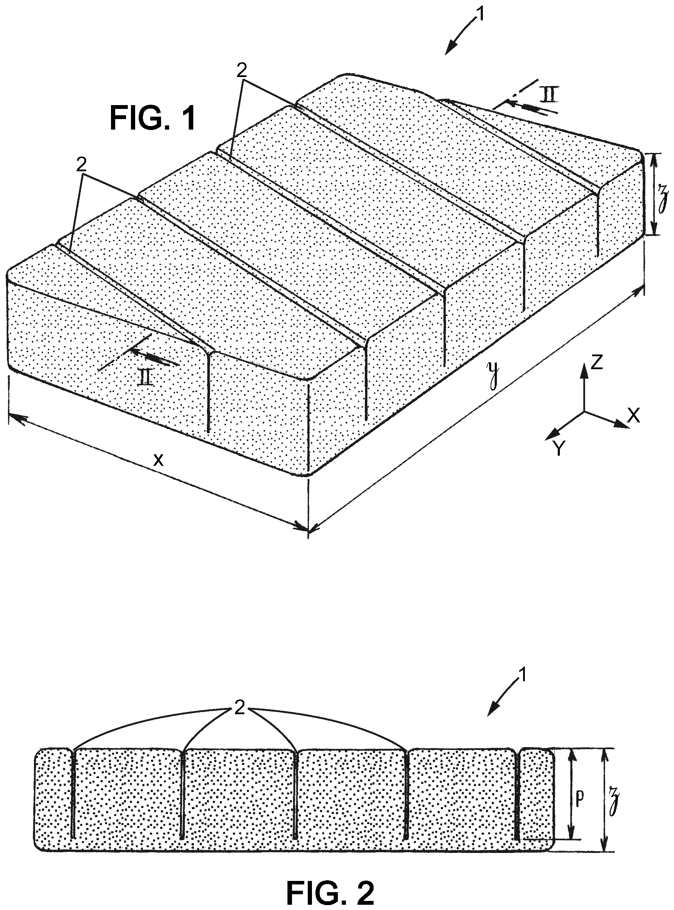

Le pâton 1 des figures 1 et 2 est un bloc de pâte de forme sensiblement parallélépipédique de largeur (x), de longueur (y) et de hauteur/épaisseur (z), en référence aux axes X,Y,Z .
Il comprend des marques en creux 2 de profondeur (p) = 98% (figure 2).
Par exemple, et dans un ordre croissant de préférence :

- (x) compris entre 2 et 15cm, de préférence entre 4 et 12cm et plus préférentiellement encore, entre 6 et 10cm, par exemple 8cm ;
- (y) compris entre 5 et 20cm, de préférence entre 8 et 15cm et plus préférentiellement encore, entre 11 et 14cm, par exemple 13cm ;
- (z) compris entre 0,5 et 5cm, de préférence entre 1 et 4cm, et plus préférentiellement encore, entre 2 et 3cm.

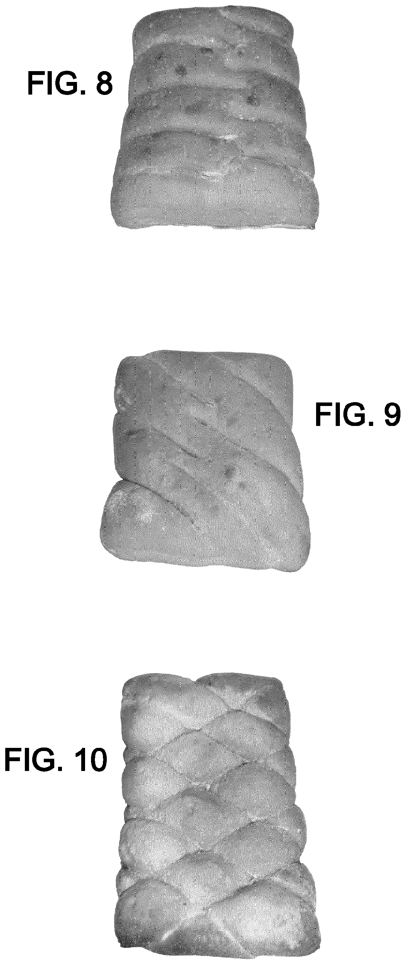

Les dimensions (x, y, z) données ici à titre d'exemples correspondent aux plus grandes dimensions des unités de pâtons ; (x) pourrait notamment être égal à (y) (faces carrés).
Le pâton 1 des figures 1 et 2 correspond au pain de la figure 6.
Comme le montrent les figures 6 à 10 à titre d'exemples, les motifs de marquage en creux 2 peuvent être des rainures rectilignes, continues, parallèles et en diagonale (figure 6), des marques en creux de forme cylindrique faites par exemple au poinçon, des rainures continues, curvilignes et longitudinales (figure 7), des rainures rectilignes, discontinues, parallèles et transversales (figure 8) ou en diagonales (figure 9), des rainures rectilignes, discontinues, parallèles en diagonales et qui s'entrecroisent (figure 10).
Il convient, selon l'invention, que ces marques en creux 2 soient réparties de manière homogène sur toute la face supérieure des pâtons.
Dans l'exemple montré aux figures 6 et 6', la surface maximale Smax d'un seul tenant (ou continue) de la face supérieure du pain, dans un plan (x', y'), est égale à 15 % de la surface totale (x', y') de la face supérieure du pain (voir figure 6').
Les figures 5COMP et 5'COMP montrent un contrexemple dans lequel le marquage est non homogène. Aucune marque en creux n'est présente sur une bande centrale Smax de la face supérieure sur toute la longueur (y') -voir Fig.5'COMP-.
Cette bande Smax correspond à la surface maximale d'un seul tenant (ou continue) de la face supérieure du pain.
Aucune des surfaces interstitielles entre les marques 2 parallèles en diagonale des deux bordures longitudinales du pain, ne fait partie de cette surface maximale d'un seul tenant, car dans un tel cas le pourtour aurait des indentations et/ou des crénelures.
Les pains des figures 6 à 10 sont *e.g.* des pains précuits dont la cuisson peut être terminée dans un grille-pain standard du commerce, grâce à leurs dimensions adaptées et la régularité de surface (reliefs pas ou peu prononcés) de leurs faces supérieure et inférieure. Ainsi, les infrarouges émis par le grille-pain sont efficaces et cuisent ou grillent de manière uniforme ledit pain sans le brûler par endroits, tout en le cuisant insuffisamment à d'autres endroits.
Les pains de dimensions (x', y', z') obtenus à partir de pâtons 1 de dimensions (x, y, z) sont tels que l'écart entre les dimensions (x', y', z') et les dimensions (x, y, z) est inférieur ou égal à 20%, de préférence 10% et plus préférentiellement encore 5%.

**5**

Par ailleurs, comme le montrent les figures 11A&B et 12A&B, pour un même grammage et pour des mêmes dimensions (x, y, z) de pâton 1, le procédé selon l'invention permet une stabilisation des dimensions du produit fini, c'est-à-dire du pain cuit, en particulier dans l'épaisseur (z, z').

Les figures 11A&B montrent que le pain précuit obtenu selon l'invention (à gauche) présente une épaisseur ($z'_a$) inférieure à celle ($z'_b$) du pain témoin de droite. En effet, la convexité du pain à gauche, est moindre que celle du pain témoin de droite. De la même façon, les figures 12A&B montrent que les dimensions de largeur ($x'_a$) et de longueur ($y'_a$) du pain de gauche, sont supérieures à celles ($x'_b$, $y'_b$) du pain témoin de droite.

Cette moindre rétractation dimensionnelle à la cuisson se traduit, par exemple, pour les pains des figures 11A&B et 12A&B, en ce que l'écart entre les dimensions (x, y, z) du pâton 1 et (x', y', z') du pain précuit, est respectivement de 10%, 5% et 5% pour le pain à gauche, et de 30%, 25% et 25% pour le pain témoin de droite.

*Le procédé*

Le procédé selon l'invention permet de disposer d'unités de pain (*e.g.* morceaux de forme générale parallélépipédique) à recuire au grille-pain dont les dimensions (x', y', z') sont adaptées à ce grille-pain de quelque type qu'il soit, en particulier à fente(s), et dont les surfaces d'une planéité ou d'un relief le plus régulier possible, pour éviter des différences marquées en terme d'intensité de grillage. Il peut s'agir, par exemple, de pains de forme sensiblement parallélépipédique, d'épaisseur comprise entre 10 et 50mm, de préférence entre 15 et 40mm, et plus préférentiellement entre 25 et 30mm. Ces pains sont obtenus par un procédé industriel dans lequel est prévu un marquage en creux (estampage) des pâtons sur au moins 80% de l'épaisseur desdits pâtons (profondeur (p)). On fait également en sorte que les marques en creux appliquées aux pâtons ne se referment pas. A cette fin, un agent anti-adhésion, de préférence de la farine, est appliqué sur lesdits pâtons avant estampage.

Il est à noter que l'ordre des étapes -a-,-b-,-c-,-d-,-e-,-f-,-g-,-h-,-i-,-j- correspond à une modalité préférée de l'invention, sans écarter pour autant des variantes dans lesquelles cet ordre serait modifié, par exemple, tout ou partie du marquage en creux -d- pourrait être mis en oeuvre avant et/ou après la fermentation -g-, et/ou la découpe transversale -f- des bandes de pâte en pâtons pourrait intervenir avant le marquage -d-.

Etape -a- : -Pétrissage

Cette étape de préparation de la pâte comprend l'opération de mélange des ingrédients traditionnels, à savoir la farine, l'eau, le sucre, la levure, les matières grasses et les additifs de panification. Ce mélange se poursuit par le pétrissage.

De préférence, la composition de la pâte est la suivante (en parties en poids) :

| | | |
|---|---|---|
| - farine | 100 | |
| - eau | 30-80 | de préférence 40-70 |
| - levure | 0,5-8 | de préférence 1-5 |
| - matières grasses | 0-15 | de préférence 0-8 |
| - sel | 0-5 | de préférence 0-2,5 |
| - additifs | 0-10 | de préférence 0-5 |
| - sucre | 0-10 | de préférence 0-5 |

La pâte est pétrie dans un pétrin traditionnel de boulangerie de type pétrin à spirale ou équivalent, selon un barème conventionnel de pétrissage, par exemple : 2-6 minutes en vitesse lente, puis 2-10 minutes en vitesse rapide.

Pour des pâtes traditionnelles, la température induite au coeur de la pâte en fin de pétrissage est comprise par exemple, selon un ordre croissant de préférence entre 20 et 35°C, 22 et 32°C, 25°C +/-1°C.

Etape -b- : Pointage

Ce procédé peut convenir à des pâtes ayant subi une fermentation en masse, appelée pointage, pendant une durée comprise entre 20 et 120 minutes, préférentiellement 50 minutes +/-10minutes.

Cette étape -b- facultative de pointage est avantageusement réalisée dans une enceinte climatisée en température (15 à 40°C, de préférence 20 à 35°C) et en hygrométrie (60 à 99% HRE, de préférence 60 à 80% HRE).

Etape -c- : Transformation

Cette étape -c- de transformation de la pâte en bandes 3 de pâte, comprend des sous-étapes d'extrusion -c1-, de laminage -c2- et de découpe longitudinale -c3-.

- La sous-étape -c1- d'extrusion consiste à faire passer la pâte dans une extrudeuse, de manière à obtenir un boudin de pâte de largeur donnée, par exemple 50 cm, suivant le rendement de la ligne d'extrusion.
- La sous-étape -c2- de laminage permet de réduire l'épaisseur du boudin jusqu'à l'épaisseur donnée z de la bande de pâte.
- La sous-étape -c3- de découpe longitudinale permet de transformer la bande de pâte laminée à l'épaisseur z, en bandes 3 de pâte de largeur x.

Etape -d- : Marquage

Le marquage en creux -d- de la face supérieure des bandes 3 de pâte est effectué au moyen d'un ou plusieurs outil(s) approprié(s) (outils d'estampage), constitué(s) de préférence par des outils à lame(s) non coupante(s) dont l'épaisseur est comprise entre 1 et 5mm, de préférence entre 2 et 3mm.

La profondeur (p) des marques en creux 2 est avantageusement comprise entre 92 et 99% de l'épaisseur totale (z) de la bande de pâte considérée. Suivant un mode particulièrement préféré de mise en oeuvre, p=98% de (z).

Suivant une caractéristique remarquable de l'invention, les marques en creux 2 réalisées à l'étape -d- sont réparties de manière homogène sur toute la face supérieure des bandes 3 de pâte.

Cela signifie, par exemple, conformément à l'invention, que la surface maximale Smax d'un seul tenant (ou continue) de la face supérieure du pâton 1, dans un plan (X, Y), est inférieure à 25%, de préférence inférieure ou égale à 20%, ou mieux encore comprise entre 15 et 20% de la surface totale (x, y) de la face supérieure du pâton.

Cette surface maximale Smax d'un seul tenant (ou continue) est par exemple celle dont le pourtour ou la forme est régulière (sans crénelures/indentations/lignes brisées).

De préférence, les marques en creux 2 réalisées à l'étape -d- ont des formes telles et sont présentes en quantité telles :

i. $x' \geq 0,8 \bullet (x)$; de préférence $x' \geq 0,9 \bullet (x)$; et,
plus préférentiellement encore $x' \geq 0,95 \bullet (x)$ ;
ii. $y' \geq 0,8 \bullet (y)$; de préférence $y' \geq 0,9 \bullet (y)$; et,
plus préférentiellement encore $y' \geq 0,95 \bullet (y)$ ;

x', y' étant respectivement les plus grandes dimensions des pains selon les axes X' et Y';
x, y étant respectivement les plus grandes dimensions des pâtons (1) selon les axes X et Y;

iii. la différence (D en %) entre la hauteur maximale moyenne (z'max moy) et la hauteur minimale moyenne (z'min moy) de la face supérieure des pains :

$$D = [(z'\text{max moy} - z'\text{min moy}) / z'\text{max moy}] \bullet 100$$

est inférieure ou égale à 30, de préférence à 25, et,
plus préférentiellement encore est comprise entre 15 et 25;

Les dimensions (x', y', z') des pains sont telles que ces derniers peuvent être introduits et chauffés dans des grille-pains à fentes standards.

Selon une disposition notable de l'invention, les marques en creux réalisées à l'étape -d-sont choisies parmi les rainures longitudinales, transversales, diagonales, curvilignes, rectilignes, en lignes brisées, parmi les combinaisons de ces rainures et/ou parmi les marques en creux faites par exemple au poinçon

Traitement anti-adhésion

Pendant au moins l'une des étapes -a-,-b-, c-,-d-, la pâte et/ou les pâtons 1 sont soumis à un traitement anti-adhésion, de préférence un farinage qui est réalisé sur toute la surface. Ce farinage doit être suffisant pour limiter le phénomène d'adhésion ou de "collant", mais surtout pour que l'agent anti-adhésion *e.g.* à base de farine remplisse, au moins en partie, les marques en creux réalisées à l'étape -d-.

Etape -e- : Remplissage complémentaire des marques (2) en creux

Selon une variante facultative, l'agent anti-adhésion, à savoir *e.g.* la farine résiduelle présente sur le pâton, en particulier sur la face supérieure du pâton, peut être brossé pour augmenter le remplissage des fentes ou des marques.

Etape -f- : Découpage transversal

Les bandes 3 de pâte marquées sont découpées transversalement pour obtenir des pâtons 1 de longueur (y). Les pâtons 1 sont de préférence de forme sensiblement parallélépipédique, de dimensions (x, y, z).

Les pâtons obtenus ont par exemple un poids compris entre 30 et 150g, de préférence entre 70 et 90g.

Etape -g- : Fermentation

Les pâtons 1 ainsi mis en forme sont disposés sur des supports d'étuvage et/ou de cuisson afin que s'opère la fermentation finale d'une durée comprise, par exemple, entre 1 et 4 heures, préférentiellement entre 1 et 2 heures, par exemple 1h30. Cette fermentation est avantageusement réalisée dans une enceinte climatisée en température (15 à 45°C, de préférence 20 à 35°C) et en hygrométrie (60 à 99% HRE, de préférence 70 à 95% HRE).

Etape -h- : Cuisson

Les pâtons 1 sont ensuite mis au four pour la cuisson -h-, de préférence dans un four à sole de pierre, et à une température comprise entre 180 et 280°C, préférentiellement entre 200 et 260°C (température de sole et de voûte), pendant 3 à 45 minutes, de préférence 5 à 25 minutes, et plus préférentiellement encore 10 à 20 minutes.

La cuisson effectuée est préférablement une pré-cuisson représentant 80% +/-10 % de la cuisson totale normalement nécessaire pour avoir un pain cuit.

Etape -i-

De manière facultative mais néanmoins préférée, les pains cuits ou précuits sont refroidis, par exemple à l'aide d'un système adapté à cette fin, telle qu'une tour de refroidissement ou analogue. A titre d'exemple, pour des pains de 60g, le temps de refroidissement peut être de l'ordre de 40 minutes +/-5 minutes.

Etape -j- Emballage

Il s'agit d'un conditionnement classique des pains (*e.g.* précuits) dans des conteneurs (*e.g.* sacs plastiques) alimentaires clos.

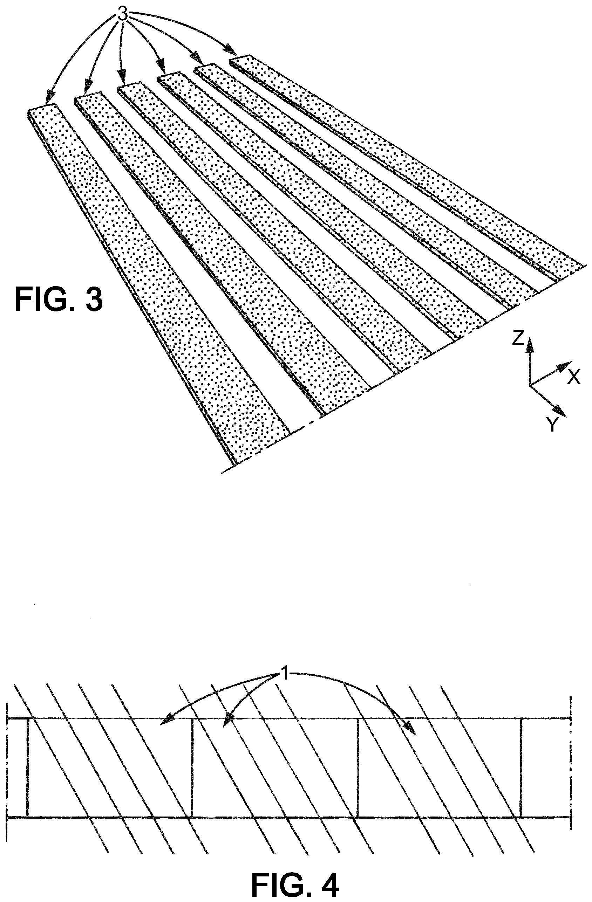

Outre les pâtons 1 selon les figures 1 et 2, ou les pains selon les figures 6 à 10, le procédé selon l'invention fait intervenir des produits intermédiaires qui sont les bandes longitudinales 3 de pâte montrées sur la figure 3, de largeur (x) et d'épaisseur (z).

La figure 4 montre ces mêmes bandes 3 de pâte découpées en unités de pâtons 1 de longueur (y).

L'exemple qui suit permet de mieux comprendre l'invention dans son aspect procédé et dans son aspect produit, et permet également d'en faire ressortir tous les avantages et variantes de mise en oeuvre ou de réalisation.

**EXEMPLE**

La composition de la pâte est la suivante :

| | |
|---|---|
| Farine de blé T55 | 25 kg |
| Eau (eau de ville) | 16 L |
| Levure pressée | 300 g |
| Huile de colza | 250 g |
| Sel | 450 g |
| Gluten | 125 g |
| Conservateur propionate de calcium | 100 g |
| Acide ascorbique | 2 mg |
| Levure désactivée | 125 g |
| Emulsifiant E471 | 125 g |

(suite)

| Emulsifiant E472 | 50 g |
|---|---|

Etape -a-

La pâte est pétrie dans un pétrin de type 'spirale' selon un barème conventionnel de pétrissage : 3 minutes en vitesse lente (40 tours/min) puis 7 minutes en vitesse rapide (80tours/min). La température de l'eau a été calculée en fonction de la température des ingrédients et de celle du fournil afin d'obtenir une pâte ayant, en fin de pétrissage, une température de 25°C.

Etape -b-

La pâte a subi une première fermentation en masse appelée plus communément pointage. Ce dernier a duré 60 minutes à une température de 25°C. La phase de pointage est réalisée dans une enceinte à une température d'ambiance de 25°C. La pâte a été recouverte d'un film plastique afin de limiter tout phénomène d'assèchement.

Sous-étape -c1-

La pâte a été calibrée par une machine appelée extrudeuse, cette dernière est constituée de bandes et de rouleaux. La bande avait une largeur de 40cm et une épaisseur de 3cm environ.
Tout au long du procédé et ce jusqu'au dépôt sur couche, la bande de pâte est transportée en continu sur une série de convoyeurs équipés de tapis plastifiés ou de cordes.
Un premier farinage (anti-adhésion) est appliqué sur le dessus de la pâte afin de pallier à des excès de collant.

Sous-étape -c2-

La pâte est ensuite laminée par une série de rouleaux afin d'obtenir une bande d'environ 7mm d'épaisseur (z). Un deuxième farinage est ensuite effectué, cette fois-ci des deux côtés de la pâte avant de lui faire subir les opérations de découpage.

Sous-étape -c3-

Dans un premier temps la bande de pâte est découpée dans le sens longitudinal par un système de disques affûtés montés sur un même axe. L'excédent de pâte (rognures) est éliminé et récupéré dans des bacs situés sous la machine. Dans cet exemple, six bandes ont été découpées à la dimension suivante : 66mm de large (x).
Après découpe longitudinale, chaque bande a été écartée par un système "polycordes" afin d'éviter tout phénomène de ré-adhésion des produits entre eux dans la suite du procédé.

Etape -d-

Un estampage manuel a été appliqué sur chaque bande 3 à l'aide d'un outil en inox composé d'une lame plate de 8cm de long et de 5mm d'épaisseur. Les marques 2 ont été réalisées dans la diagonale de la bande en respectant un angle d'environ 45° sur une profondeur (p) de 6,8mm soit environ 97% de l'épaisseur totale (z) de la bande. Chaque estampage était séparé par une distance d'environ 4cm.

Etape -f-

Les 6 bandes 3 sont ensuite découpées transversalement à l'aide d'une guillotine affûtée permettant d'obtenir le produit final aux dimensions et poids souhaité : longueur (y) : 120mm et poids : 75g.

Etape -g-

Chaque produit a été ramassé manuellement puis déposé sur une toile textile communément appelée en boulangerie : couche. Cette dernière sert de support au produit pendant la fermentation. Chaque couche avait été préalablement farinée avec de la semoule de blé dur. Elles ont été introduites dans une étuve réglée à une température de 28°C et possédant une hygrométrie de 85% pendant une durée de 75 minutes. Cette fermentation correspond à une prise de volume d'environ 2,5 fois le volume de départ.

Etape -h-

Les pâtons 1 ainsi fermentés ont été directement déposés sur la sole du four (four à sole avec sole en ciment réfractaire). De la vapeur d'eau a été injectée avant et après dépose, ceci afin de permettre une saturation complète de l'ambiance du four. Le temps et la température de cuisson sont les suivants : 230°C (température sole et voûte) pendant 14 minutes.

Etape -i-

Après défournement des produits à l'aide d'une pelle, les pains ont refroidi sur des grilles en inox pendant une durée de 60 minutes à température ambiante (environ 25°C).

Etape -j-

Les pains ont enfin été emballés manuellement dans des sacs plastiques, eux-mêmes hermétiquement fermés par un système de thermo-soudure.

## Revendications

**1.** Pâtons (1) pour l'obtention de produits de boulangerie cuits ou précuits, en particulier des pains précuits, ces pâtons se présentent sous forme de pièces de dimensions x, y, z en référence à un repère tridimensionnel d'axes X;Y;Z orthogonaux, x, y étant respectivement les plus grandes dimensions des pâtons (1) selon les axes X et Y, **caractérisés en ce qu'**ils comportent des marques en creux (2) réparties de manière homogène sur toute la face supérieure du pâton, de manière que la surface maximale d'un seul tenant (ou continue) de la face supérieure du pâton (1), dans un plan (X, Y), soit inférieure à 25%, de préférence inférieure ou égale à 20%, ou mieux encore comprise entre 15 et 20% de la surface totale de la face supérieure du produit, dans un plan (X, Y), **en ce que** la profondeur p d'au moins une partie des marques en creux (2) correspond à au moins 80%, de préférence 90%, de la dimension z du pâton (1) considéré, z et p étant mesurés sur le même axe, et, de manière plus préférée p est égal à 98 % +/- 1 de z, et **en ce que** les marques en creux (2) sont au moins partiellement remplies d'un agent anti-adhésion de fabrication.

**2.** Procédé de fabrication de produits de boulangerie cuits ou précuits, en particulier de pains précuits, **caractérisé en ce qu'**il consiste essentiellement :

-a- à préparer une pâte,
-b- éventuellement, à faire fermenter en masse ladite pâte,
-c- à transformer la pâte en bandes (3) de pâte de largeur x,
-d- à marquer en creux au moins la face supérieure des bandes (3) de pâte, la profondeur p d'au moins une partie des marques en creux (2) correspondant à au moins 80%, de préférence 90% de l'épaisseur z de la bande (3) de pâte considérée, z et p étant mesuré sur le même axe, et, de manière plus préférée p est égal à 98 % +/- 1% de z,
les marques en creux (2) étant au moins partiellement remplies d'un agent anti-adhésion de fabrication,
-e- éventuellement à compléter le remplissage des marques en creux (2) des bandes (3) de pâte par l'agent anti-adhésion,
-f- à découper transversalement les bandes (3) de pâte pour obtenir des pâtons (1) de longueur y donnée, ces pâtons se présentant sous forme de pièces (ou d'unités) de dimensions x, y, z en référence à un repère tridimensionnel d'axes X;Y;Z orthogonaux, x, y étant respectivement les plus grandes dimensions des pâtons (1) selon les axes X et Y, et les marques en creux (2) étant réparties de manière homogène sur toute la face supérieure du pâton, de manière que la surface maximale d'un seul tenant (ou continue) de la face supérieure du pâton (1), dans un plan (X, Y), soit inférieure à 25%, de préférence inférieure ou égale à 20%, ou mieux encore comprise entre 15 et 20% de la surface totale de la face supérieure du produit,
-g- à faire fermenter les pâtons (1),
-h- à cuire ou précuire les pâtons (1),
-i- éventuellement, à refroidir les produits de boulangerie cuits,
-j- éventuellement, à emballer les produits de boulangerie cuits refroidis.

**3.** Procédé selon la revendication 2, **caractérisé en ce que** l'on utilise de la farine à titre d'agent anti-adhésion, **en ce que** l'on farine les bandes (3) de pâte avant l'étape -d- de marquage en creux, de préférence pendant les étapes -b- et -c-,
et **en ce que** l'éventuelle étape -e- consiste notamment à brosser les bandes (3) de pâte.

4. Procédé selon la revendication 2 ou 3, **caractérisé en ce que** l'étape -c- de transformation de la pâte en bandes (3) de pâte comprend des sous-étapes d'extrusion -c1-, de laminage -c2- et de découpe longitudinale -c3-.

5. Procédé selon l'une au moins des revendications 2 à 4, **caractérisé en ce que** la cuisson de l'étape -h- est partielle de manière à obtenir des pains précuits.

6. Procédé selon l'une au moins des revendications 2 à 5, **caractérisé en ce que** l'étape - h- est effectuée dans une ambiance saturée en vapeur d'eau.

7. Procédé selon l'une au moins des revendications 2 à 6, **caractérisé en ce qu'**il comprend l'étape -j- d'emballage, les pains refroidis étant disposés dans des conteneurs d'emballage qui sont ensuite clos.

8. Procédé selon l'une au moins des revendications 2 à 7, **caractérisé en ce que** les dimensions x', y', z' des produits de boulangerie obtenus sont telles que ces derniers peuvent être introduits et chauffés dans des grille-pains à fentes standards.

## Patentansprüche

1. Teigstücke (1) zum Erhalten von gebackenen oder vorgebackenen Backwaren, insbesondere von vorgebackenen Broten, wobei diese Teigstücke als Stücke mit den Dimensionen x, y, z mit Bezug zu einer dreidimensionalen Referenz von orthogonalen Achsen X;Y;Z vorliegen, wobei x, y jeweils die größten Dimensionen der Teigstücke (1) gemäß den Achsen X und Y darstellen, **dadurch gekennzeichnet, dass** sie gleichmäßig auf der gesamten Fläche des Teigstücks verteilte Vertiefungsmarken (2) umfassen, derart, dass die gesamte (oder fortlaufende) maximale Oberfläche der Oberseite des Teigstücks (1) in einer Ebene (X, Y) kleiner 25%, bevorzugt kleiner gleich 20%, oder stärker bevorzugt 15-20% der Gesamtfläche der Oberseite des Produkts in einer Ebene (X, Y) ist, dass die Tiefe p wenigstens eines Teils der Vertiefungsmarken (2) wenigstens 80%, bevorzugt 90% der Dimension z des entsprechenden Teigstücks (1) entspricht, wobei z und p auf der gleichen Achse gemessen werden, und, wobei stärker bevorzugt, p gleich 98% +/-1 von z ist,
und dass die Vertiefungsmarken (2) wenigstens teilweise mit einem Herstellungs-Antihaftmittel gefüllt sind.

2. Verfahren zur Herstellung von gebackenen oder vorgebackenen Backwaren, insbesondere von vorgebackenen Broten, **dadurch gekennzeichnet, dass** es im Wesentlichen umfasst:

-a- Zubereiten eines Teigs,
-b- gegebenenfalls Fermentieren der Teigmasse,
-c- Umformen des Teigs in Teigstreifen (3) der Größe x,
-d- Anbringen von Vertiefungsmarken an der Oberseite der Teigstreifen (3), wobei die Tiefe p wenigstens eines Teils der Vertiefungsmarken (2) wenigstens 80%, bevorzugt 90% der Dicke z des entsprechenden Teigstreifens (3) entspricht, wobei z und p auf der gleichen Achse gemessen werden, und wobei stärker bevorzugt p gleich 98% +/-1% von z ist,
wobei die Vertiefungsmarken (2) wenigstens teilweise mit einem Herstellungs-Antihaftmittel gefüllt werden,
-e- gegebenenfalls Abschließen des Füllens der Vertiefungsmarken (2) der Teigstreifen (3) mit dem Antihaftmittel,
-f- Querschneiden der Teigstreifen (3) zum Erhalten von Teigstücken (1) mit einer vorgegebenen Länge y, wobei diese Teigstücke in Form von Stücken (oder Einheiten) mit den Dimensionen x, y, z mit Bezug zu einer dreidimensionalen Referenz von orthogonalen Achsen X;Y;Z vorliegen, wobei x, y jeweils die größten Dimensionen der Teigstücke (1) gemäß den Achsen X und Y darstellen und die Vertiefungsmarken (2) gleichmäßig auf der gesamten Fläche des Teigstücks verteilt werden, derart dass die gesamte (oder fortlaufende) maximale Oberfläche der Oberseite des Teigstücks (1) in einer Ebene (X, Y) kleiner 25%, bevorzugt kleiner gleich 20%, oder stärker bevorzugt 15-20% der Gesamtfläche der Oberseite des Produkts in einer Ebene (X, Y) ist,
-g- Fermentieren der Teigstücke (1),
-h- Backen oder Vorbacken der Teigstücke (1),
-i- gegebenenfalls Abkühlen der gebackenen Backwaren,
-j- gegebenenfalls Verpacken der abgekühlten gebackenen Backwaren.

**3.** Verfahren nach Anspruch 2, **dadurch gekennzeichnet, dass** Mehl als Antihaftmittel verwendet wird, dass die Teigstreifen (3) vor dem Schritt -d- des Anbringens von Vertiefungsmarken bemehlt werden, bevorzugt während der Schritte -b- und -c-, und dass der mögliche Schritt -e- insbesondere darin besteht, die Teigstreifen (3) zu bürsten.

**4.** Verfahren nach Anspruch 2 oder 3, **dadurch gekennzeichnet, dass** der Schritt -c- des Umformens des Teigs in Teigstreifen (3) Unterschritte der Extrusion -c1-, Auswalzen -c2- und Längsschneiden -c3- umfasst.

**5.** Verfahren nach wenigstens einem der Ansprüche 2 bis 4, **dadurch gekennzeichnet, dass** das Garen in Schritt -h- partiell ist, um vorgebackene Brote zu erhalten.

**6.** Verfahren nach wenigstens einem der Ansprüche 2 bis 5, **dadurch gekennzeichnet, dass** der Schritt -h- in einer mit Wasserdampf gesättigten Umgebung erfolgt.

**7.** Verfahren nach wenigstens einem der Ansprüche 2 bis 6, **dadurch gekennzeichnet, dass** es den Schritt -j- der Verpackung umfasst, wobei die abgekühlten Brote in Verpackungsbehältnissen angeordnet werden, welche anschließend verschlossen werden.

**8.** Verfahren nach wenigstens einem der Ansprüche 2 bis 7, **dadurch gekennzeichnet, dass** die Dimensionen x', y', z' der erhaltenen Backwaren derart sind, dass letztere in Toaster mit Standardschlitzen eingeführt und erhitzt werden können.

**Claims**

**1.** Pieces of dough (1) for the obtention of bakery products baked or pre-baked, in particular pre-baked breads, these pieces of dough being in the form of pieces having dimensions x, y, z with reference to a three-dimensional reference frame of orthogonal axes X, Y, Z, x, y being respectively the greatest dimensions of the piece of dough (1) along the axes X and Y, **characterized in that** they have recessed marks (2) distributed uniformly over the entire top surface of the piece of dough, so that the maximum contiguous (or continuous) surface area of the top surface of the piece of dough (1), in a plane (X, Y), is less than 25%, preferably less than or equal to 20%, or even better comprised between 15 and 20% of the total surface area of the top surface of the product, in a plane (X, Y), **in that** the depth p of at least some of the recessed marks (2) corresponds to at least 80%, and preferably 90% of the dimension z of the piece of dough (1) in question, z and p being measured on the same axis, and, more preferably p is equal to 98 % +/- 1 of z, and **in that** the recessed marks (2) are at least partially filled with an anti-adhesion production agent.

**2.** Method for producing bakery products baked or pre-baked, in particular breads pre-baked, **characterized in that** it essentially consists of:

-a- preparing a dough,
-b- optionally, bulk fermentation (initial fermentation) of said dough,
-c- transforming the dough into strips (3) of dough of width x,
-d- providing recessed marks in at least the top surface of the strips (3) of dough, the depth p of at least some of the recessed marks (2) corresponding to at least 80%, and preferably 90%, of the thickness z of the strip (3) of dough in question, z and p being measured on the same axis, and, more preferably p is equal to 98 % +/- 1% of z, the recessed marks (2) being at least partially filled with an anti-adhesion production agent,
-e- optionally, completing the filling of the recessed marks (2) of the strips (3) of dough with the anti-adhesion agent,
-f- cutting the strips (3) of dough transversally in order to obtain pieces of dough (1) of given length y, these pieces of dough being in the form of pieces (or units) having dimensions x, y, z with reference to a three-dimensional reference frame of orthogonal axes X, Y, Z, x, y being respectively the greatest dimensions of the piece of dough (1) along the axes X and Y, and the recessed marks (2) being distributed uniformly over the entire top surface of the piece of dough, so that the maximum contiguous (or continuous) surface area of the top surface of the piece of dough (1), in a plane (X, Y), is less than 25%, preferably less than or equal to 20%, or even better comprised between 15 and 20% of the total surface area of the top surface of the product, in a plane (X, Y),
-g- fermenting the pieces of dough (1),

-h- baking the pieces of dough (1),
-i- optionally, cooling down the baked bread,
-j- optionally, packaging the cooled baked bread.

3. Method according to claim 2, **characterized in that** flour is used as anti-adhesion agent,
**in that** the strips (3) of dough are floured before the step -d- of providing recessed marks, preferably during steps -b- and -c-,
and **in that** the optional step -e- consists in particular of brushing the strips (3) of dough.

4. Method according to claim 2 or 3, **characterized in that** the step -c- of transforming the dough into strips (3) of dough comprises sub-steps of extrusion -c1-, sheeting -c2- and longitudinal cutting -c3-.

5. Method according to at least one of claims 2 to 4, **characterized in that** the baking in step -h- is partial so as to obtain pre-baked breads.

6. Method according to at least one of claims 2 to 5, **characterized in that** the baking in step -h- is carried out in steam-saturated atmosphere.

7. Method according to at least one of claims 2 to 6, **characterized in that** for the packaging in step -j-, the cooled breads are arranged in packaging containers which are then sealed.

8. Method according to at least one of claims 2 to 7, **characterized in that** the dimensions x', y', z' of the obtained breads are such that the latter can be inserted into and heated in toasters with standard slots.

**FIG. 1**

**FIG. 2**

FIG. 3

FIG. 4

FIG. 5 comp

FIG. 5' comp

FIG. 6

FIG. 6'

FIG. 7

FIG. 8

FIG. 9

FIG. 10

**FIG. 11A**

**FIG. 11B**

**FIG. 12A**

**FIG. 12B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004039163 A1
- WO 9731539 A
- WO 9940796 A1
- US 3536014 A
- US 4606923 B
- WO 0035291 A1

- EP 0841009 A2
- US 20040151807 A1
- NL 255103 A
- US 3936255 A
- US 4789555 A
- DE 4125912 C1